Europäisches Patentamt

European Patent Office

Office européen des brevets

(19)

(11) Veröffentlichungsnummer: **0 342 452**
**A1**

(12) # EUROPÄISCHE PATENTANMELDUNG

(21) Anmeldenummer: 89108150.7

(22) Anmeldetag: 05.05.89

(51) Int. Cl.4: **H02K 17/30 , H02P 7/622**

(30) Priorität: 07.05.88 DE 3815737

(43) Veröffentlichungstag der Anmeldung:
**23.11.89 Patentblatt 89/47**

(84) Benannte Vertragsstaaten:
**CH DE FR GB IT LI SE**

(71) Anmelder: **Menge, Eberhard**
**Weinbergstrasse 11**
**D-7313 Reichenbach(DE)**

(72) Erfinder: **Menge, Eberhard**
**Weinbergstrasse 11**
**D-7313 Reichenbach(DE)**

(74) Vertreter: **Schieschke, Klaus, Dipl.-Ing. et al**
**Patentanwälte Dipl.-Ing. E. Eder Dipl.-Ing. K.**
**Schieschke Elisabethstrasse 34**
**D-8000 München 40(DE)**

(54) **Einphasen-Induktionsmotor mit einsträngiger Statorwicklung.**

(57) Die Erfindung bezieht sich auf einen Einphasen-Induktionsmotor mit einsträngiger Statorwicklung mit einem Rotor mit einem oder mehreren Wicklungssträngen. Hierbei ist jeder Rotorwicklungsstrang in sich geschlossen und in eine Rotationswicklung 3 und eine Steuerwicklung 4 aufgeteilt, wobei die Steuerwicklung 4 gegenüber der Rotationswicklung 3 entgegen der Drehrichtung in einem Winkel bis etwa 70° angeordnet ist und einen ebenfalls auf dem Rotor angeordneten, steuerbaren Halbleiter 5, vorzugsweise Triac aufweist.

## FIG. 1

## FIG. 4

EP 0 342 452 A1

## Einphasen-Induktionsmotor mit einsträngiger Statorwicklung

Die Erfindung betrifft einen Einphasen-Induktionsmotor mit einsträngiger Statorwicklung, welche ein Wechselfeld erzeugt, mit einem Rotor mit einem oder mehreren Wicklungssträngen, die nur im Drehmoment erzeugenden Drehwinkelbereich eingeschaltet sind.

Motoren, die zu diesem Oberbegriff zählen, sind beispielsweise als Repulsionsmotoren bekannt. Diese Motoren haben -mit allen Strombändermotoren gemeinsam - die wesentlichen Nachteile, daß sie einen Stromwender und Kohlebürsten benötigen, welche bereits nach etwa 2000 Betriebsstunden verschlissen sind und ein lautes Betriebsgeräusch erzeugen.

Bekannte stromwenderlose Einphasen-Induktionsmotoren haben dagegen den Nachteil begrenzter Drehzahl, welche an Netzwechselstrom maximal 50 U/s beträgt. Die Umrichtung des Stromes auf höhere Frequenzen bedingt sehr hohen Aufwand, weil der Strom für solche Motoren wenigstens angenäherte Sinusform aufweisen muß.

Bekannte stromwenderlose Gleichstrommotoren können hohe Drehzahlen bei hohen Betriebszeiten erreichen; sie weisen jedoch den Nachteil sehr großen, notwendigen Schaltmittelaufwandes auf.

Die Aufgabe der vorliegenden Erfindung besteht darin, einen Elektromotor zu schaffen, welcher hohe Drehzahlen ohne prinzipbedingte Drehzahlbegrenzung erreicht, leise läuft und kostengünstig hergestellt werden kann, wobei die höheren Drehzahlen bei gleicher Leistung zu kompakterer Bauweise führen und solche Motoren beispielsweise auch zum Antrieb kompakter Gebläse oder Pumpen eingesetzt werden können.

Diese Aufgabe wird erfindungsgemäß dadurch gelöst, daß bei Verwendung eines einsträngigen Stators, der ein Wechselfeld erzeugt, mindestens ein in sich geschlossener Rotorwicklungsstrang ausgeführt ist, der einen am Rotor untergebrachten steuerbaren Halbleiter, vorzugsweise einen Triac aufweist, wobei jeder Rotorwicklungsstrang in eine Rotationswicklung kommt, die der Drehmomenterzeugung dient und eine Steuerwicklung, die vorwiegend die Aufgabe hat, den Triac einzuschalten, aufgeteilt ist und daß dabei die Steuerwicklung, um die Drehrichtung festzulegen, gegenüber der Rotationswicklung entgegen der Drehrichtung in einem Winkel bis etwa 70 Grad angeordnet ist. Durch diese Anordnung wird der Triac des jeweiligen Rotorwicklungsstranges und mit ihm der Stromfluß dann eingeschaltet, wenn sich die Rotationswicklung in einem Drehwinkel von etwa 10 bis 45 Grad über ihrer waagerechten Lage quer zum Statorfluß hinaus befindet, wobei die Rotationswicklung im Drehwinkelbereich von etwa 10 bis 80 Grad drehmomenterzeugend das Bestreben hat, ihre beiden Schenkel im Statorfluß in Deckung zu stellen, weil in dieser Stellung der Spulenstrom seinen Kleinstwert hat. In dieser Stellung schaltet der Triac deshalb selbsttätig aus.

Wird die Statorwicklung direkt an Netzwechselspannung angeschlossen, erreicht der Rotor eine Drehzahl von maximal ca. 46 U/s. Wird die Netzwechselspannung jedoch mittels bekannten Phasenanschnittes bei Phasenwinkeln von etwa 90/270 Grad angeschnitten, erreicht die maximale Drehzahl ca. 100 U/s, weil die Lücken im Statorstromfluß und sein Neuanstieg und Abfall auf diesen Motor wie verdoppelte Frequenz wirken, wobei mittels eines Potis der eingeschaltete Phasen bereich verkleinert und damit die Drehzahl gesenkt werden kann. Weil der Phasenanschnitt den fließenden Strom verkleinert, ist zum Ausgleich die Windungszahl der Statorwicklung zu verkleinern; damit kann bei gleichem Spannungsverhältnis auch die Windungszahl der Rotorwicklungen verkleinert werden. Mit den verkleinerten Windungszahlen wird vorteilhafterweise die Induktivität vermindert.

Wird vor die Statorwicklung ein Vierweggleichrichter geschaltet und werden die in der Regel vorhandenen zwei Statorspulen getrennten Stromkreisen so zugeordnet, daß sie beispielsweise mittels bekannter Wechselrichterschaltung mit zwei Thyristoren und Löschkondensator wechselweise eingeschaltet werden, wobei die beiden Statorspulen so angeschlossen sind, daß ihre Ströme entgegengesetzt fließen, bewirken sie im Stator ein Wechselfeld der Frequenz, mit der die beiden Wechselrichter-Thyristoren eingeschaltet werden und damit eine entsprechend hohe Rotordrehzahl. Dabei kann eine hohe Umschaltfolge mit Widerstand und Kondensator an jedem Gate bzw. Diag, wie bei Phasenanschnitten bekannt, erreicht werden. Für noch kürzere Umschaltfolgen können die Thyristoren des Wechselrichters beispielsweise mittels einer astabilen Kippschaltung wechselweise eingeschaltet werden.

Die Steuerwicklung kann einerseits über einen Diag am Gate und andererseits am Anschluß A1 des Triac angeschlossen sein oder aber andererseits am Anschluß A2 des Triac, wobei in beiden Fällen mit einem Widerstand zwischen Steuerwicklung und Gate bzw. Diag der Gatestrom auf die gewünschte Einschaltdrehstellung eingestellt werden kann. Besonders vorteilhaft ist jedoch, die Steuerwicklung einerseits sowohl an das Gate, gegebenenfalls über Widerstand und Diag, als auch an die Rotationswicklung und andererseits an den Anschluß A1 des Triac anzuschließen, weil dann der in der Steuerwicklung induzierte Strom auch voll zur Drehmomenterzeugung genutzt wird und nach dem Einschalten die Gatespannung auf nahe Null sinkt.

In einer abgewandelten Ausführungsform der erfindungsgemäßen Lösung kann für die Steuerspule bzw. die Steuerspulen auf gleicher Welle ein Steuerrotor eingesetzt werden, womit unabhängig von den Rotornuten eine optimale Einschaltdrehwinkelstellung sowie mehr Wickelraum für die Rotationswicklungen erreichbar sind. Hierfür können von der Statorwicklung räumlich getrennte Primärwicklungen eingesetzt werden.

In einer weiteren abgewandelten Ausführungsform kann auf dem Rotor vor das Gate bzw. den Diag auch ein fotoelektrischer Halbleiter geschaltet werden, welcher im Zusammenwirken mit einer am Stator angebrachten Lichtquelle den Triac in der für das Motordrehmoment optimalen Drehwinkelstellung einschaltet.

In einer anderen abgewandelten Ausführungsform kann vor dem Gate bzw. Diag ein magnetfeldabhängiger Sensor, beispielsweise eine Hallsonde mit den erforderlichen Verstärkungsmitteln geschaltet werden, wobei der Sensor auf der Rotorwelle außerhalb des Statorfeldes angeordnet ist und mit dem Stator ein Magnet verbunden ist, welcher in dem Sensor dann ein das Einschalten des Triac bewirkendes Signal erzeugt, wenn sich die Rotationswicklung in der optimalen drehmomenterzeugenden Drehwinkelstellung befindet.

In einer erweiterten Ausführung der Erfindung können Mittel vorgesehen sein, welche den Rotor im Stillstand durch magnetische Wirkung in einer für den Anlauf günstigen Stellung halten. Derartige Mittel sind im Prinzip bekannt. In der hier vorgeschlagenen erfinderischen Lösung sind sie gekennzeichnet durch ein auf der Rotorwelle angeordnetes mehrzähniges Teil mit so viel diagonalen Zahnpaaren wie Rotorwicklungsstränge ausgeführt sind, wobei die Winkelstellung zwischen Zahnpaar und einem am Stator angeordneten Gegenpol oder Gegenpolpaar einerseits und den Rotorwicklungssträngen andererseits so gewählt ist, daß der Rotor im Stillstand in einer solchen Drehwinkelstellung gehalten wird, daß einer seiner Wicklungsstränge in seinem Einschaltbereich steht.

Für die beschriebenen Mittel ergibt sich eine besonders einfache Bauausführung, wenn auf dem Rotor ein mehrzähniges Stahlblechteil mit abgewinkelten Zähnen und am Stator ein Permanentmagnet angeordnet werden.

Die Erfindung wird nachfolgend anhand von in der Zeichnung dargestellten Ausführungsbeispielen näher beschrieben. In der Zeichnung zeigen:

Fig. 1 einen Querschnitt durch einen erfindungsgemäßen Motor;

Fig. 2 einen Querschnitt durch den Rotor einer abgewandelten Ausführungsform;

Fig. 3 ein Schaltbild eines Stators mit Phasenanschnittsteuerung;

Fig. 4 ein Schaltbild eines Rotors;

Fig. 5 ein Schaltbild eines Rotors mit abgewandeltem Anschluß der Steuerwicklung;

Fig. 6 ein Schaltbild eines Rotors mit einer weiteren Abwandlung des Anschlusses der Steuerwicklung

Fig. 7 ein Schaltbild eines Stators mit einem Wechselrichter;

Fig. 8 die eingeschalteten Phasenbereiche zu einer Schaltung nach Fig. 7;

Fig. 9 eine weitere Ausführungsform der Erfindung im Querschnitt.

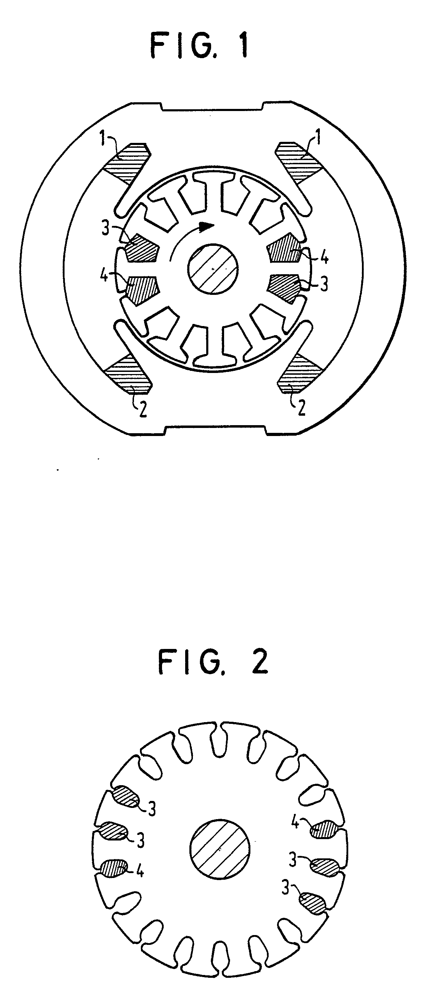

Beim Elektromotor nach Fig. 1 und 2 stellen 1 und 2 die Statorwicklung dar. Die Rotationswicklung 3 und die Steuerwicklung 4 sind in der Drehwinkelstellung gezeichnet, in welcher ein Triac 5 einschaltet, wodurch sich der Rotor in der Pfeilrichtung um etwa 70 Grad dreht. Der besseren Übersichtlichkeit wegen ist nur ein Wicklungsstrang dargestellt. In den leer gezeichneten Nuten sind weitere Wicklungsstränge unterbringbar, von denen jede den Rotor um etwa 75 Grad dreht. Weil nach 180 Grad Drehung die Wicklungsstränge nochmals in ihren Wirkbereich kommen, dreht der Rotor fortlaufend.

In Fig. 2 ist zur Drehmomenterhöhung die Rotationswicklung 3 in vier Rotornuten untergebracht. In den leer gezeichneten Nuten sind noch weitere Wicklungsstränge unterbringbar.

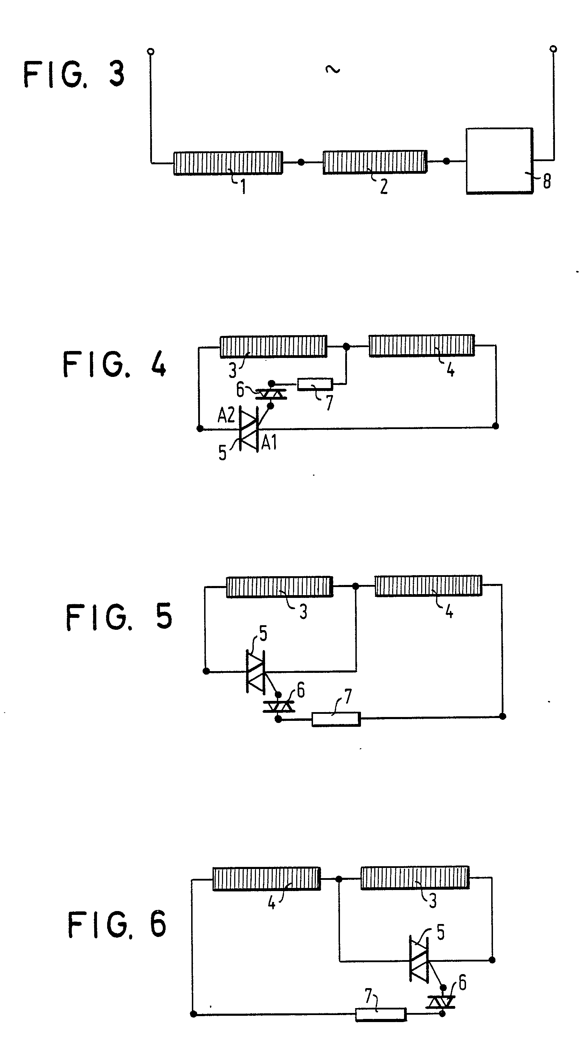

Das Statorschaltbild nach Fig. 3 stellt außer den beiden Statorwicklungen 1 und 2 den Phasenanschnitt 8 dar, wobei die innere Schaltung des Phasenanschnittes bekannt ist.

Das Rotorschaltbild nach Fig. 4 stellt dar, wie die Rotationsspule 3, die Steuerspule 4, der Triac 5, der Diag 6 und der Widerstand 7 vorteilhaft zu schalten sind. Zwischen A1/A2 des Triac 5 steht die Summe der in der Rotationswicklung 3 und der Steuerwicklung 4 induzierten Spannung an. Am Gate des Triac 5 steht die in der Steuerwicklung 4 induzierte Spannung zur Verfügung. Der Widerstand 7 wird so bemessen, daß der Triac 5 dann eingeschaltet wird, wenn die Rotationsspule, die in Fig. 1 dargestellte Drehstellung erreicht hat. Sobald der Triac 5 eingeschaltet ist, fließt durch ihn sowie die beiden Wicklungen 3 und 4 die Summe des induzierten Stromes und bewirkt das Drehmoment.

Fig. 5 stellt ein Rotorschaltbild dar, bei dem die Steuerwicklung 4 zur Rotationswicklung 3 und den Triac 5 nicht in Reihe, sondern parallel geschaltet ist und zwar zwischen Gate und Anschluß A1 des Triac 5.

Fig. 6 stellt eine andere Abwandlung der Rotorwicklung dar, bei der die Steuerwicklung 4 zwischen Gate und Anschluß A2 des Triac 5 geschaltet ist.

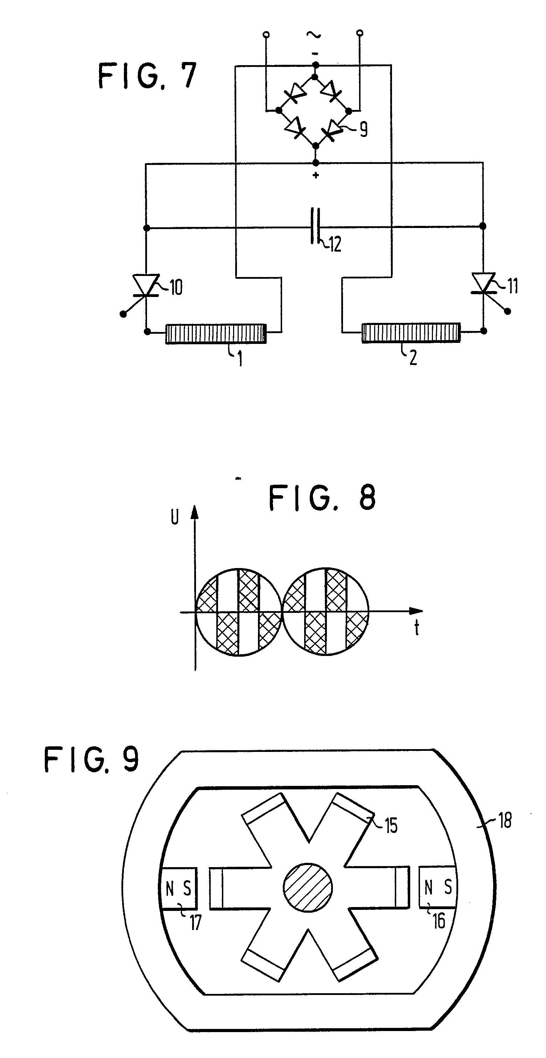

Fig. 7 stellt eine abgewandelte Statorwicklung dar, bei der die Netzwechselspannung durch einen Vierweggleichrichter 9 in pulsierende Gleichspannung umgewandelt und dann mittels der beiden Thyristoren 10 und 11 und des Löschkondensators 12 auf die Statorwicklungen 1 und 2 aufgeteilt wird. Die beiden Statorwicklungen 1 und 2 sind dabei erfindungsgemäß gegensinnig angeschlossen. Die zu den bekannten Wechselrichterschaltungen gehörenden Freilaufdioden, Umschwingdrosseln und Einschalteinrichtungen für die Thyristoren sind der Übersichtlichkeit wegen nicht näher dargestellt.

Fig. 8 stellt die eingeschalteten Zeitspannen beliebig gewählter Frequenzen für die Statorwicklungen 1 und 2 zu Fig. 7 dar. Dabei zeigen die ausgefüllten Felder oberhalb der Abszisse, wann Statorwicklung 1 eingeschaltet ist. Die ausgefüllten Felder unterhalb der Abszisse zeigen, wann Statorwicklung 2 eingeschaltet ist. Weil Statorwicklung 2 gegenseitig angeschlossen ist, ist es sinnvoll, ihren Stromfluß unterhalb der Abszisse anzugeben, denn in der gezeichneten Weise, die einem Wechselstrom höherer Frequenz entspricht, wird das Statormagnetfeld erzeugt.

In weiterer Ausführungsmöglichkeit der Erfindung können Mittel vorgesehen sein, welche den Stator im Stillstand durch magnetische Wirkung in einer für den Anlauf günstigen Stellung halten. Hierbei stellt in Fig. 9 die Positionszahl 15 das mehrzähnige Teil auf der Rotorwelle dar, 16 zeigt einen permanent magnetischen Gegenpol, zusammen mit 17 das Gegenpolpaar, 18 stellt den Stator dar. Das mehrzähnige Teil 15 ist mit so viel diagonalen Zahnpaaren wie Rotorwicklungssträngen ausgeführt. Die Winkelstellung zwischen Zahnpaar und dem am Stator 18 angeordneten Gegenpol 16 oder dem Ge genpolpaar 17 einerseits und den Rotorwicklungssträngen andererseits ist hierbei so gewählt, daß der Rotor im Stillstand in einer solchen Drehwinkelstellung gehalten wird, daß stets einer seiner Wicklungsstränge in seinem Einschaltbereich steht.

Eine besonders einfache Bauausführung ergibt sich dann, wenn auf dem Rotor ein mehrzähniges Stahlblechteil mit abgewinkelten Zähnen und am Stator ein Permanentmagnet angeordnet sind.

## Ansprüche

1. Einphasen-Induktionsmotor mit einsträngiger Statorwicklung, mit einem Rotor mit einem oder mehreren Wicklungssträngen, dadurch gekennzeichnet, daß jeder Rotorwicklungsstrang in sich geschlossen ist, in eine Rotationswicklung und eine Steuerwicklung aufgeteilt ist, wobei die Steuerwicklung (4) gegenüber der Rotationswicklung (3) entgegen der Drehrichtung in einem Winkel bis etwa 70° angeordnet ist und einen ebenfalls auf dem Rotor angeordneten steuerbaren Halbleiter (5), vorzugsweise Triac, aufweist.

2. Motor nach Anspruch 1, dadurch gekennzeichnet, daß vor der Statorwicklung (1; 2) eine Phasenanschnittsteuerung (8) vorgesehen ist.

3. Motor nach Anspruch 1, dadurch gekennzeichnet, daß vor der Statorwicklung (1; 2) ein Gleichrichter (9) und eine Wechselrichtersteuerung vorgesehen sind und beide Statorwicklungen (1, 2) hinsichtlich der Stromflußrichtung entgegengesetzt angeschlossen sind.

4. Motor nach Anspruch 1 bis 3, dadurch gekennzeichnet, daß die Steuerwicklung (4) einerseits sowohl mit der Rotationswicklung (3) wie mit dem Gate und andererseits mit dem Anschluß A1 des Triac (5) verbunden ist.

5. Motor nach Anspruch 1 bis 3, dadurch gekennzeichnet, daß die Steuerwicklung einerseits mit dem Gate und andererseits mit einem der Anschlüsse A1 oder A2 verbunden ist.

6. Motor nach Anspruch 4 oder 5, dadurch gekennzeichnet, daß zwischen Steuerwicklung (4) und Gate ein Widerstand und/oder ein Diag vorgesehen ist.

7. Motor nach Anspruch 1 bis 6, dadurch gekennzeichnet, daß am Rotor vor dem Gate ein fotoelektronischer Halbleiter angeordnet ist, welcher mit einer mit dem Stator verbundenen Lichtquelle zusammenwirkt.

8. Motor nach Anspruch 1 bis 6, dadurch gekennzeichnet, daß am Rotor vor dem Gate ein magnetfeldabhängiger Sensor sowie die zur Verstärkung seines Signals notwendigen Mittel vorgesehen sind und der Sensor mit einem Magneten zusammenwirkt, welcher mit dem Stator verbunden ist.

9. Motor nach Anspruch 1 bis 8, dadurch gekennzeichnet, daß die Steuerwicklung oder ihre Mehrzahl auf einem Steuerrotor untergebracht ist, der neben einem Rotationsrotor auf der gleichen Welle angeordnet ist.

10. Motor nach Anspruch 1, dadurch gekennzeichnet, daß auf der Rotorwelle ein mehrzähniges Teil (15) und am Stator ein magnetisch damit zusammenwirkender Gegenpol (16) oder ein Gegenpolpaar (17) angeordnet ist, wobei mindestens eines dieser Teile permanent magnetisch ist, die Anzahl der Zähne als diagonale Zahnpaare mit der Anzahl der Rotorwicklungsstränge übereinstimmt und für die Zähne eine Winkelstellung gewählt ist, in der sie in Zusammenwirkung mit dem Gegenpol (16) oder Gegenpolpaar (17) im Stillstand den Rotor mit einem seiner Wicklungsstränge in dessen Einschaltwinkelbereich hält.

# FIG. 1

# FIG. 2

FIG. 3

FIG. 4

FIG. 5

FIG. 6

EP 0 342 452 A1

FIG. 7

FIG. 8

FIG. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | FR-A-2150509 (NIPKIEP) <br> * das ganze Dokument * | 1-3 | H02K17/30 <br> H02P7/622 |
| A | DE-A-2233784 (SMIDT H.) <br> * Seite 3, Zeile 11 - Seite 4, Zeile 16; Figur 1 * | 1, 9 | |
| A | GB-A-1404154 (HENRY GLASER & AL.) <br> * Seite 2, Zeile 38 - Zeile 90; Figur 1 * | 1 | |
| A | PATENT ABSTRACTS OF JAPAN <br> vol. 5, no. 113 (E-66)(785) 22 Juli 1981, <br> & JP-A-56 53563 (HIDEO KONASE) 13 Mai 1981, <br> * siehe das ganze Dokument * | 1 | |

RECHERCHIERTE
SACHGEBIETE (Int. Cl.4 )

H02K
H02P

Der vorliegende Recherchenbericht wurde für alle Patentansprüche erstellt

| Recherchenort | Abschlußdatum der Recherche | Prüfer |
|---|---|---|
| DEN HAAG | 24 JULI 1989 | LE GUAY P.A. |

EPO FORM 1503 03.82 (P0403)